# EUROPÄISCHE PATENTSCHRIFT

(11) **EP 2 730 765 B1**
(45) Veröffentlichungstag und Bekanntmachung des Hinweises auf die Patenterteilung: **02.12.2015**
(21) Anmeldenummer: 13183517.5
(22) Anmeldetag: 09.09.2013
(51) Int. Cl.: F01N 13/18, F01N 13/14, F16L 27/10, F16L 27/11, F16L 51/02, F16L 51/03

(54) **Flexibles Leitungselement**
Flexible pipe element
Elément de conduite flexible

(30) Priorität: 13.11.2012 DE 102012220690
(43) Veröffentlichungstag der Anmeldung: 14.05.2014
(73) Patentinhaber: Witzenmann GmbH, 75175 Pforzheim (DE)
(72) Erfinder: Pluschke, Michael, 75305 Neuenbürg (DE); Fochtner, Armin, 75417 Mühlacker (DE); Städele, Stephanie, 76131 Karlsruhe (DE); Zimmerer, Christian, 75175 Pforzheim (DE)
(74) Vertreter: Lemcke, Brommer & Partner Patentanwälte Partnerschaft mbB

(56) Entgegenhaltungen:
- EP-A1- 0 448 769
- EP-A1- 2 450 546
- WO-A1-2011/161524
- DE-A1-102009 002 673
- DE-B3-102011 014 350
- US-A- 3 051 515

## Beschreibung

Die Erfindung betrifft ein flexibles Leitungselement nach dem Oberbegriff des Anspruchs 1, insbesondere ein Entkoppelelement, für eine Abgasanlage eines Kraftfahrzeugs.

Flexible Leitungselemente werden beispielsweise in Form von Entkoppelelementen in Abgasleitungen von Kraftfahrzeugen eingesetzt, um Motorschwingungen und andere schädliche Bewegungen von der Abgasanlage zu entkoppeln.

Ein flexibles Leitungselement zur Verwendung in einer Abgasanlage von Kraftfahrzeugen ist beispielsweise aus DE 203 02 657 U1 bekannt. Hier ist im Inneren eines schraubengangförmigen oder ringgewellten Metallbalgs ein Metallschlauch angeordnet. Zwischen dem Metallschlauch und dem Metallbalg ist weiterhin ein Abstandshalter aus Gewebe oder Gestricke zu Dämpfungszwecken vorgesehen.

Wie auch bei dem oben genannten Stand der Technik ist üblicherweise der Metallschlauch als Wickelschlauch ausgebildet und wird als den Metallbalg innen auskleidender Liner verwendet. Dieser erfüllt dann neben dem ursprünglichen Verwendungszweck, nämlich der Optimierung der Strömung, der Akustik, etc. innerhalb des Balgs, auch den Zweck der Isolierung.

Ein gattungsgemäßer Gegenstand ist aus der WO 2011/161524 A1 bekannt. Diese offenbart ein flexibles Leitungselement mit einem inneren Leitungsteil und an einem äußeren Leitungsteil, welche beiden Leitungsteile mit ihren Anschlussenden im Bereich eines zusätzlichen Bauteils, nämlich einer Endhülse, unmittelbar miteinander verbunden sind.

Aus der US 3,051,515 ist eine Leitungsverbindung zur Druckkompensation bekannt, bei der zwischen zwei konzentrisch angeordneten Balgelementen ein als U-Profil ausgebildeter Abstandshalter angeordnet ist. Die Anbindung weiterer Leitungselemente erfolgt in herkömmlicher Weise über umlaufende Schweißnähte direkt an den beteiligten Rohrleitungselementen.

Aufgrund der verschärften Abgasgesetzgebung wird heutzutage vermehrt Harnstoff oder HC (Kohlenwasserstoff, z. B. Dieselkraftstoff) zur Abgasnachbehandlung eingesetzt. Wird der Harnstoff oder der Kohlenwasserstoff vor dem Entkoppelelement, d. h. dem Metallbalg mit innenliegendem Liner "eingedüst", kann er sich in den Agraffen bzw. Zwischenräumen des Liners absetzen und dort auskristallisieren. Hierdurch wird die Beweglichkeit des Liners beeinträchtigt oder geht vollständig verloren. Dies kann zu einem wesentlich früheren Ausfalls des Liners und des gesamten Bauteils führen. Auch kann sich der Harnstoff oder Kohlenwasserstoff zwischen dem Balg und dem Liner ablagern und dort auskristallisieren, da es sich bei einem als Wickelschlauch ausgebildeten Metallschlauch um kein vollständig dichtes Bauteil handelt. Hierdurch kann nicht nur der Liner verfrüht ausfallen, sondern auch der Metallbalg beschädigt werden. Die Abgastemperatur reicht häufig in beiden Fällen nicht aus, um den Harnstoff bzw. Kohlenwasserstoff durch Erhitzen zu verdampfen, was unweigerlich zu einer Verkürzung der Lebensdauer der Gesamtbauteils führt.

Daher ist es eine Aufgabe der vorliegenden Erfindung, ein flexibles Leitungselement, insbesondere für einen Entkoppler einer Abgasanlage in einem Kraftfahrzeug, bereitzustellen, bei welchem Ablagerungen beispielsweise durch Harnstoff oder HC reduziert, aufgelöst oder gänzlich vermieden werden können, um die Lebensdauer des Bauteils zu verlängern.

Des Weiteren liegt der Erfindung ausgehend von dem oben genannten Stand der Technik die Aufgabe zugrunde, das vorstehend definierte Leitungselement dahingehend weiterzubilden, dass eine möglichst vorteilhafte und einfache Anbindung des inneren Leitungsteils und des äußeren Leitungsteil realisiert ist, wobei zudem sichergestellt sein soll, dass der nötige Abstand zwischen den beiden Leitungsteilen sichergestellt ist. Außerdem soll eine Verbindung des so geschaffenen Leitungselements mit weiteren Leitungselementen eines Abgasstrangs oder dergleichen in einfacher und vorteilhafter Weise realisierbar sein.

Die Aufgabe der Erfindung wird durch ein flexibles Leitungselement mit den Merkmalen gemäß Anspruch 1 gelöst. Vorteilhafte Weiterbildungen der Erfindung sind in den abhängigen Ansprüchen definiert.

Erfindungsgemäß bereitgestellt wird also ein flexibles Leitungselement, insbesondere ein Entkoppelelement für eine Abgasanlage eines Kraftfahrzeugs, welches ein inneres Leitungsteil und ein äußeres Leitungsteil aufweist, wobei das äußere Leitungsteil das innere Leitungsteil in einem vorbestimmten Abstand umgibt, so dass zwischen dem inneren und dem äußeren Leitungsteil ein Zwischenraum vorhanden ist, wobei das innere Leitungsteil gasdicht ausgebildet ist und einen Balgabschnitt aufweist. Der Balgabschnitt des inneren Leitungsteils ist zwischen einem ersten glattzylindrischen Endabschnitt und einem zweiten glattzylindrischen Endabschnitt des inneren Leitungsteils angeordnet, welche Endabschnitte jeweils mit einer Befestigungseinrichtung zum Befestigen des inneren Leitungsteils an dem äußeren Leitungsteil versehen sind. Die Befestigungseinrichtung umfasst ein axial verlängertes U-Profil, welches U-Profil mit einem ersten Schenkel an den ersten glattzylindrischen Endabschnitt des inneren Leitungsteils angebunden ist und mit einem zweiten Schenkel an den glattzylindrischen Endabschnitt des äußeren Leitungsteils angebunden ist. Das axial verlängerte U-Profil weist eine Verlängerung auf, welche an dem ersten Schenkel vorgesehen ist.

"Axial verlängert" bedeutet hierbei, dass ein (freier) Schenkel des U-Profils länger ausgebildet ist als der andere (freie) Schenkel, wobei das gesamte Profil mit seinen (freien) Schenkeln etwa in Richtung der Längserstreckung (Längsachse) des Leitungselements angeordnet ist.

Die so erzielte Anbindung des inneren Leitungsteils an das äußere Leitungsteil ist mittels des U-Profils besonders vorteilhaft und einfach realisierbar. Über seinen mittleren Schenkel sorgt das U-Profil hierbei für den nötigen Abstand zwischen den beiden Leitungsteilen.

An der axialen Verlängerung können vorteilhafterweise Anschlusselemente, d.h. weitere (Rohr-)Leitungselemente des Abgasstrangs oder dergleichen angeordnet werden. Der innere, verlängerte Schenkel kann dabei zumindest abschnittweise eine radiale Erstreckungskomponente nach außen aufweisen.

Durch die erfindungsgemäße Konfiguration, bei der als inneres Leitungsteil eine gasdichte Innenkomponente mit Balgabschnitt eingesetzt wird, kann ein isoliertes Entkoppelelement realisiert werden, bei welchem Harnstoff oder HC unproblematisch auch unmittelbar vor dem Entkoppelelement einsetzbar ist, da die eingedüsten Stoffe die gasdichte Innenkomponente nicht durchdringen, wobei in dem Entkoppelelement, d. h. innerhalb des inneren Leitungsteils gebildete Ablagerungen in den Wellen des inneren Metallbalgs leichter wieder auflösbar sind, beispielsweise durch starkes Erhitzen bei Schnellfahrt (Autobahn), als in den Windungen eines Wickelschlauchs. Die Wellung des inneren Balgabschnitts führt einerseits gerade im Zuge der Eindüsung von Harnstoff oder HC dazu, dass das Abgas und der eingedüste Stoff optimal verwirbelt werden. In diesem Zusammenhang ist es also sogar vorteilhaft, wenn keine definierte Strömungsführung, wie sie durch einen herkömmlichen, beispielsweise als Wickelschlauch ausgeführten Innenliner realisiert wird, innerhalb des Entkoppelelements gegeben ist. Wenn andererseits der innere Leitungsabschnitt, welcher einen Balgabschnitt aufweist, unmittelbar als eigentliches Leitungselement für den Abgasstrom Verwendung findet, können zwar weiterhin Ablagerungen auftreten, diese sind jedoch unkritisch, da während der normalen Betriebszyklen eines Abgasstranges in regelmäßigen Abständen, beispielsweise bei schnellen Autobahnfahrten, ein starkes Erhitzten des gesamten Abgasstranges erfolgt, wodurch die Ablagerungen (durch Verdampfen) wieder vom Balg gelöst werden, worauf bereits hingewiesen wurde. Wenn hier, wie beim Stand der Technik, jedoch ein Wickelschlauch als Innenkomponente verwendet würde, blieben die Ablagerungen in den Freiräumen des Wickelschlauchs erhalten oder könnten sogar in den Bereich zwischen Wickelschlauch und Balg gelangen, was die Lebensdauer und sonstigen Eigenschaften der Anordnung negativ beeinflussen würde.

Außerdem kann das so ausgebildete flexible Leitungselement große Bewegungen aufnehmen. Ein weiterer Vorteil ist die akustische Isolierung, die durch einen Luftspalt in dem Zwischenraum zwischen dem inneren Leitungsteil und dem äußeren Leitungsteil erreicht wird.

Gemäß einer bevorzugten Ausführungsform ist das innere Leitungsteil ein Balg oder Ringwellschlauch aus Metall und das äußere Leitungsteil ebenfalls ein Balg oder Ringwellschlauch aus Metall. Der Außenbalg und der Innenbalg schaffen, wie oben bereits ausgeführt, den Vorteil, dass Ablagerungen, welche beispielsweise durch Harnstoff gebildet werden, aus den Wellen des Innenbalgs, welcher anstelle eines Wickelschlauchs verwendet wird, leichter entfernbar sind als aus den Zwischenräumen der Windungen beispielsweise eines Wickelschlauchs. Der Außenbalg und der Innenbalg sind vorzugsweise hinsichtlich ihrer mechanischen, geometrischen und dynamischen Eigenschaften aufeinander abgestimmt. Darüber hinaus bietet die Verwendung eines Metallbalgs als inneres Leitungsteil anstelle eines Wickelschlauchs den Vorteil, dass der innere Metallbalg vollständig dicht ist, so dass kein Harnstoff in den Zwischenraum zwischen innerem und äußerem Metallbalg gelangen und sich dort ablagern kann. Hierauf wurde oben schon detailliert hingewiesen.

Gemäß einer weiteren bevorzugten Ausführungsform ist das innere Leitungsteil ein Innenbalg, und das äußere Leitungsteil ist ein Wickelschlauch. Hierdurch werden die oben bereits ausgeführten Vorteile erzielt, da sich die Gefahr der Bildung von Ablagerungen im Bereich der Innenkomponente oder im Zwischenraum zwischen innerem und äußerem Leitungsteil stark reduziert.

Gemäß noch einer bevorzugten Ausführungsform ist in dem Zwischenraum zwischen dem inneren Leitungsteil und dem äußeren Leitungsteil ein Isoliermittel angeordnet, was für eine akustische und thermische Isolierung des flexiblen Leitungselements sorgt.

Gemäß noch einer weiteren bevorzugten Ausführungsform ist das Isoliermittel Luft. Das Verwenden von Luft als Isoliermittel ermöglicht sowohl die Aufrechterhaltung der Flexibilität des Leitungselements als auch die Gewährleistung der Temperaturbeständigkeit der Isolierung. Da in diesem Fall keine Reibung auftritt, kann diese Form der Isolierung für Entkoppelelemente verwendet werden, an welchen große Bewegungen auftreten, wobei dann kein Verschleiß durch Reibung auftritt. Es kann jedoch auch eine stoffliche Isolation zwischen der inneren und äußeren Komponente vorgesehen werden, da es sich hier um ein geschlossenes System handelt, in dem es lediglich geringen oder keinen Verschleiß der zwischenliegenden lsolationsmaterialien geben wird. Beispiele für Isolationsstoffe sind Glasfasermaterial oder Basaltsteinwolle, ohne dass diese Aufzählung abschließend wäre.

Ferner ist es vorteilhaft, wenn der Balgabschnitt des inneren Leitungsteils etwa mittig zwischen einem ersten (glatt-)zylindrischen Endabschnitt und einem zweiten (glatt-)zylindrischen Endabschnitt des ersten Leitungsteils angeordnet ist. Die beiden Endabschnitte und entsprechend die Befestigungs-/Verbindungseinrichtungen müssen nicht identisch ausgebildet sein.

Von Vorteil ist auch, wenn zwischen dem inneren Leitungsteil und dem äußeren Leitungsteil im Bereich der jeweiligen ersten und/oder zweiten Endabschnitte jeweils ein Dichtring, insbesondere aus Graphit, angeordnet ist. Diese Ausgestaltung ist jedoch nicht darauf beschränkt, dass an beiden Enden die genannten Dichtringe vorhanden sein müssen. Vielmehr können beide Enden auch verschieden ausgebildet sein.

Darüber hinaus kann das äußere Leitungsteil zumindest an einem der ersten und zweiten Endabschnitte von einer Endhülse umgeben sein, an welche ein weiteres (Rohr-)Leitungselement anbindbar ist.

Vorzugsweise ist auch an dem U-Profil ein weiteres (Rohr-)Leitungselement anbindbar.

Vorzugsweise können das innere Leitungsteil und das äußere Leitungsteil darüber hinaus unterschiedliche Längen aufweisen.

Weiterhin ist es von Vorteil, wenn bestimmte Oberflächen des inneren Leitungsteils und/oder des äußeren Leitungsteils mit einer Beschichtung versehen sind. Beispielsweise können die inneren Oberflächen des inneren Leitungsteils und/oder des äußeren Leitungsteils geschwärzt sein, um eine bessere Absorption von Wärme, je nach Anwendung, zu erzielen.

Gemäß einer weiteren bevorzugten Ausführungsform ist das äußere Leitungsteil zumindest teilweise von einer Außenkomponente, insbesondere von einem Außenliner (Wickelschlauch), einem Gestricke, einem Geflecht oder einem Schrumpfschlauch, umgeben, um eine Verschmutzung des Balgs zu verhindern. Auch verbessert eine zusätzliche Außenkomponente die Ästhetik des Leitungselements sowie die Dämpfungswirkung.

Weitere Merkmale und Vorteile der vorliegenden Erfindung ergeben sich aus der nachfolgenden Beschreibung von Ausführungsbeispielen anhand der Zeichnung; hierbei zeigt:
- Fig. 1: eine teilweise geschnittene Ansicht eines flexiblen Leitungselements gemäß einer nicht erfindungsgemäßen Ausführungsform;
- Fig. 2: eine teilweise geschnittene Ansicht eines flexiblen Leitungselements gemäß einer weiteren, nicht erfindungsgemäßen Ausführungsform;
- Fig. 3: eine teilweise geschnittene Ansicht eines flexiblen Leitungselements gemäß einer alternativen, nicht erfindungsgemäßen Ausführungsform;
- Fig. 4: eine teilweise geschnittene Ansicht eines flexiblen Leitungselements gemäß einer erfindungsgemäßen Ausführungsform;
- Fig. 5A, 5B: jeweilige Ansichten eines als Entkoppelelement ausgebildeten erfindungsgemäßen flexiblen Leitungselements, an welches Verbindungsteile angeschlossen sind.

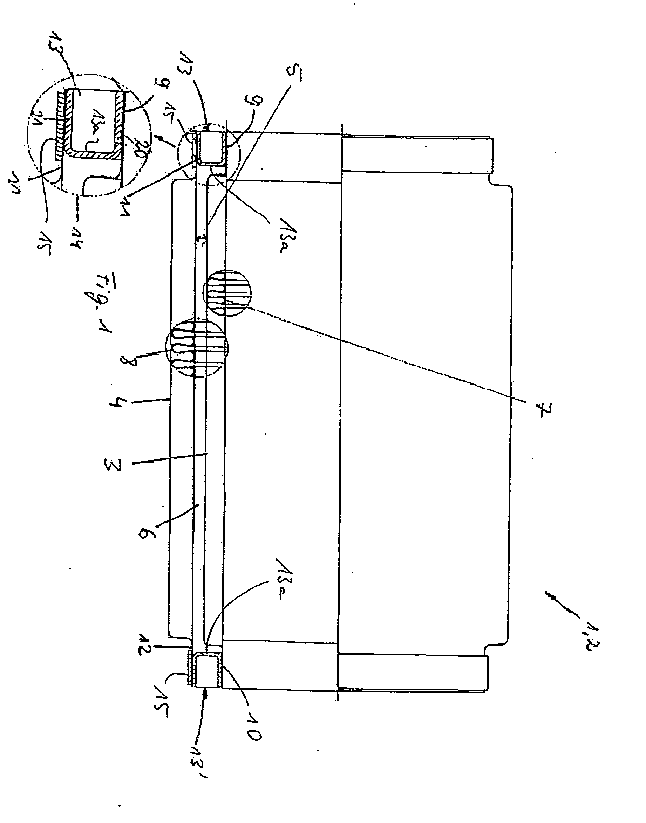

Fig. 1 zeigt eine teilweise geschnittene Ansicht eines als Entkoppelelement 1 für eine Abgasanlage eines ausgebildeten flexiblen Leitungselements 2 gemäß einer nicht erfindungsgemäßen Ausführungsform. Das flexible Leitungselement 2 weist ein inneres Leitungsteil 3 und ein äußeres Leitungsteil 4 auf, welches das innere Leitungsteil 3 in einem vorbestimmten Abstand 5 umgibt, so dass zwischen dem inneren Leitungsteil 3 und dem äußeren Leitungsteil 4 ein Zwischenraum 6 gebildet ist, in welchem Luft als Isoliermittel eingeschlossen ist. Sowohl das innere Leitungsteil 3 als auch das äußere Leitungsteil 4 weist einen hier nur ausschnittsweise dargestellten Balgabschnitt auf, wobei der Balgabschnitt des inneren Leitungsteils 3 mit dem Bezugszeichen 7 und der Balgabschnitt des äußeren Leitungsteils 4 mit dem Bezugszeichen 8 gekennzeichnet ist. Jeder der Balgabschnitte 7, 8 ist mittig zwischen zwei zylindrischen Endabschnitten angeordnet und erstreckt sich im Wesentlichen über die gesamte Länge des Entkoppelelements 1. Dabei ist der Balgabschnitt 7 des inneren Leitungsteils 3 zwisehen einem ersten zylindrischen Endabschnitt 9 und einem zweiten zylindrischen Endabschnitt 10 angeordnet, und der Balgabschnitt 8 des äußeren Leitungsteils 4 ist zwischen einem ersten zylindrischen Endabschnitt 11 und einem zweiten zylindrischen Endabschnitt 12 angeordnet. An bzw. zwischen den ersten zylindrischen Endabschnitten 9, 11 und den zweiten zylindrischen Endabschnitten 10, 12 ist jeweils eine Befestigungs- oder Verbindungseinrichtung 13, 13' angeordnet, um das innere Leitungsteil 3 an dem äußeren Leitungsteil 4 zu befestigen. Die Befestigungseinrichtungen 13, 13' sind jeweils als U-Profile ausgebildet und am Rand der ersten zylindrischen Endabschnitte 9, 11 bzw. der zweiten zylindrischen Endabschnitte 10, 12 angeordnet, so dass die Enden der freien Schenkel der U-Profile gemeinsam mit den genannten Endabschnitten 9-12 abschließen. Dies ist im Detail nochmals in dem vergrößerten Ausschnitt, der durch das Bezugszeichen 14 gekennzeichnet ist, gezeigt. Wie in der Detailansicht 14 erkennbar ist, ist dabei ein erster, innerer Schenkel 20 des U-Profils an den ersten zylindrischen Endabschnitt 9 des inneren Leitungsteils 3 angebunden, z. B. angeschweißt, und ein zweiter, äußerer Schenkel 21 des U-Profils ist an den zylindrischen Endabschnitt 11 des äußeren Leitungsteils 4 angebunden bzw. angeschweißt. Der mittlere Schenkel 13a des Profils sorgt für den Abstand zwischen den Leitungsteilen 3, 4; seine Erstreckung in radialer Richtung ist größer als die Balgwellenhöhe im Balgabschnitt 7 des inneren Leitungsteils 3. Bezugszeichen 15 kennzeichnet eine Endhülse für die Anbindung des Außenbalgs 4. Diese Endhülse 15 kann zum Anbinden einer zusätzlichen Außenkomponente (Wickelschlauch, Geflecht, Gestricke ...) dienen (nicht gezeigt).

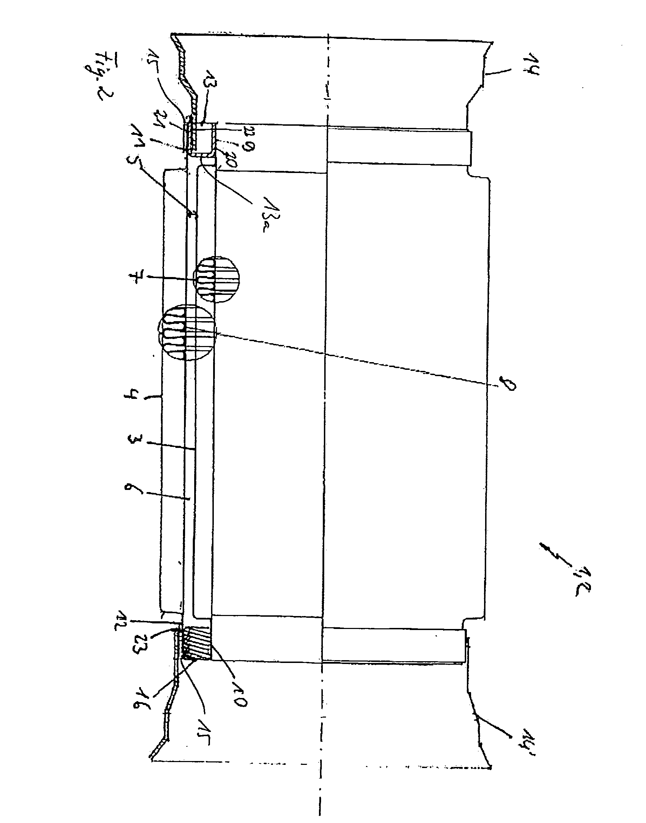

Fig. 2 zeigt eine teilweise geschnittene Ansicht eines flexiblen Leitungselements 2 gemäß einer weiteren, nicht erfindungsgemäßen Ausführungsform. Wie hier erkennbar ist, ist an der Befestigungseinrichtung 13 über das U-Profil ein sich erweiterndes Anschlusselement 14 angebunden. Hierzu ist das Anschlusselement 14 auf der linken Seite der Zeichnung an eine Innenwand 22 des zweiten Schenkels 21 des U-Profils angeschweißt. Das Anschlusselement 14' auf der rechten Seite der Zeichnung ist dagegen direkt an eine Außenwand 23 der Endhülse 15 angebunden bzw. angeschweißt. An die Anschlusselemente 14, 14' können weitere Leitungselemente der Abgasanlage, welche hier nicht dargestellt sind, oder dergleichen angeschlossen werden. Weiterhin ist zwischen den zylindrischen Endabschnitten 10 und 12 des inneren Leitungsteils 3 bzw. des äußeren Leitungsteils 4 auf der rechten Seite der Anordnung alternativ zu dem U-Profil auf der anderen Seite ein Dichtelement 16, wie beispielsweise ein Dichtring aus Graphit, eingefügt. Die Erfindung ist hierauf nicht beschränkt. Das Dichtelement 16 kann z. B. auch bei der Ausgestaltung gemäß Figur 1 Anwendung finden, wie überhaupt alle gezeigten oder beschriebenen Endanbindungsarten der Leitungsteile 3, 4 grundsätzlich austauschbar und kombinierbar sind.

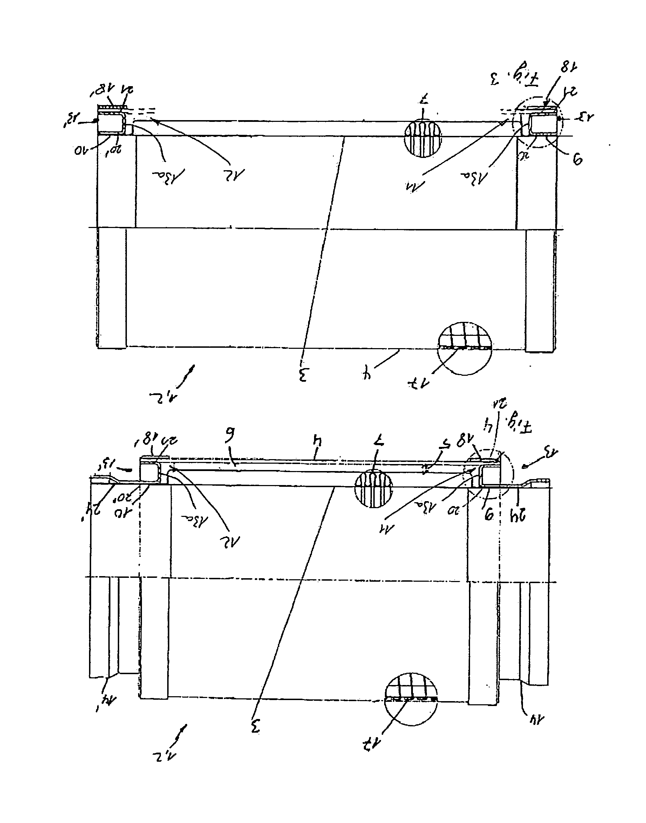

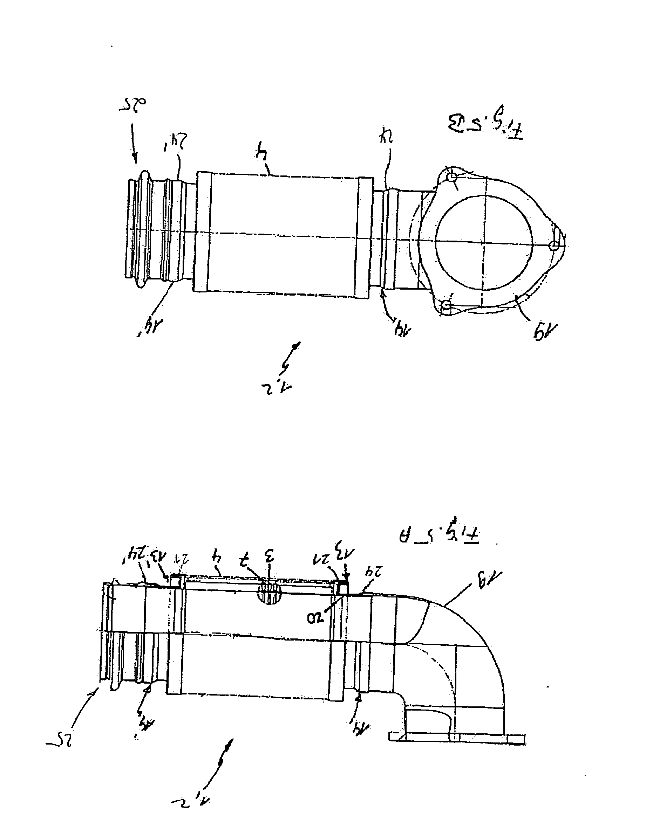

Fig. 3 zeigt eine teilweise geschnittene Ansicht eines als Entkoppelelement 1 ausgebildeten flexiblen Leitungselements 2 gemäß einer weiteren, nicht erfindungsgemäßen Ausführungsform, welches sich von der in Figur 1 dargestellten Ausführungsform dadurch unterscheidet, dass hier als äußeres Leitungsteil 4 anstelle des Metallbalgs ein Wickelschlauch 17 vorgesehen ist (vgl. auch Figur 4). Das innere Leitungsteil 3 ist jedoch nach wie vor als Metallbalg bzw. mit einem Balgabschnitt 7 ausgebildet, so dass der Zwischenraum 6 zwischen dem inneren Leitungsteil 3 und dem äußeren Leitungsteil 4 nach innen abgedichtet ist. Auch hier wird das Gas oder Abgas im Inneren des Entkoppelelements 1 durch den Metallbalg 7 geführt, und eventuelle Ablagerungen können leicht wieder entfernt werden. Der Wickelschlauch 17, welcher das äußere Leitungsteil 4 bildet, wird mit seinem Endabschnitten unter Endhülsen 18 bzw. 18' über die U-förmige Befestigungseinrichtung 13 bzw. 13' mit dem inneren Leitungsteil 3 verbunden. Hierzu ist wiederum ein erster Schenkel 20 bzw. 20' der Befestigungseinrichtung 13 bzw. 13' mit dem zylindrischen Endabschnitt 9 bzw. 10 des inneren Leitungsteils 3 verbunden bzw. daran angeschweißt, und der zweite Schenkel 21 ist mit dem zylindrischen Endabschnitt 11, 12 des Wickelschlauchs 17 und oder einer Endhülse 18 bzw. 18' verbunden bzw. daran angeschweißt.

Fig. 4 ist ebenfalls eine teilweise geschnittene Ansicht eines flexiblen Leitungselements 1 gemäß noch einer erfindungsgemäßen Ausführungsform, welche auch mit einem Wickelschlauch 17 als äußeres Leitungsteil 4 ausgestattet ist. Die hier dargestellte Ausführungsform unterscheidet sich jedoch von der in Figur 3 dargestellten Ausführungsform dadurch, dass die Befestigungseinrichtung 13 bzw. 13' eine einstückig angeformte axiale Verlängerung 24, 24' an dem ersten Schenkel 20 bzw. 20' aufweist, welche zumindest funktional etwa analog zu den Anschlusselementen 14, 14' ausgebildet sind (vgl. Figur 2). Die genannten axialen Verlängerungen 24, 24' besitzen zu ihren freien Enden hin abschnittweise eine radiale Erstreckungskomponente, so dass sich der lichte Querschnitt entsprechend erweitert, wie dargestellt.

Figuren 5A und 5B zeigen jeweilige Ansichten eines als Entkoppelelement 1 ausgebildeten erfindungsgemäßen flexiblen Leitungselements 2, wie es beispielsweise in Figur 4 dargestellt ist, wobei Figur 5A eine teilweise geschnittene Seitenansicht und Figur 5B eine Draufsicht ist. Das Entkoppelelement 1 ist hier mit einem weiteren Verbindungsteil 19, hier mit einem etwa um 90° gekrümmten Verbindungsrohr (Abgaskrümmer), zum Anordnen des Entkoppelelements 1 in einem Abgasstrang, verbunden. Das Verbindungsteil 19 ist an der Verlängerung 24 des ersten Schenkels 20 der Befestigungseinrichtung 13 angebracht bzw. daran angeschweißt, welche Verlängerung 24 das Anschlusselement 14 bildet. Bezugszeichen 25 bezeichnet ein weiteres Leitungselement 25 der Abgasanlage, welches an die Verlängerung 24' angebunden ist.

## Patentansprüche

1. Flexibles Leitungselement (2), insbesondere Entkoppelelement (1), für eine Abgasanlage eines Kraftfahrzeugs, welches ein inneres Leitungsteil (3) und ein äußeres Leitungsteil (4) aufweist, wobei das äußere Leitungsteil (4) das innere Leitungsteil (3) in einem vorbestimmten Abstand (5) umgibt, so dass zwischen dem inneren und dem äußeren Leitungsteil (3, 4) ein Zwischenraum (6) vorhanden ist, wobei das innere Leitungsteil (3) gasdicht ausgebildet ist und einen Balgabschnitt oder Ringwellabschnitt (7, 8) aufweist, und wobei der Balgabschnitt (7) des inneren Leitungsteils (3) zwischen einem ersten glattzylindrischen Endabschnitt (9) und einem zweiten glattzylindrischen Endabschnitt (10) des inneren Leitungsteils (3) angeordnet ist, welche Endabschnitte (9, 10) jeweils mit einer Befestigungseinrichtung (13, 13') zum Befestigen des inneren Leitungsteils (3) an dem äußeren Leitungsteil (4) versehen sind, **dadurch gekennzeichnet, dass** die Befestigungseinrichtung (13, 13') ein axial verlängertes U-Profil umfasst, dass das U-Profil mit einem ersten Schenkel (20, 20') an den ersten glattzylindrischen Endabschnitt (9) des inneren Leitungsteils (3) angebunden ist und mit einem zweiten Schenkel (21) an den glattzylindrischen Endabschnitt (11) des äußeren Leitungsteils (4) angebunden ist, und dass das axial verlängerte U-Profil eine Verlängerung (24, 24') aufweist, welche an dem ersten Schenkel (20, 20') vorgesehen ist.

2. Flexibles Leitungselement (2) gemäß Anspruch 1, **dadurch gekennzeichnet, dass** das innere Leitungsteil (3) ein Ringwellschlauch oder Balg und das äußere Leitungsteil (4) ein Ringwellschlauch oder Balg ist, vorzugsweise aus Metall.

3. Flexibles Leitungselement (2) gemäß Anspruch 1, **dadurch gekennzeichnet, dass** das innere Leitungsteil (3) ein Ringwellschlauch oder Balg und das äußere Leitungsteil (4) ein Wickelschlauch ist.

4. Flexibles Leitungselement (2) gemäß einem der Ansprüche 1 bis 3, **dadurch gekennzeichnet, dass** in dem Zwischenraum (6) zwischen dem inneren Leitungsteil (3) und dem äußeren Leitungsteil (4) ein Isoliermittel, insbesondere Luft oder Basaltsteinwolle oder Glasfaser, angeordnet ist.

5. Flexibles Leitungselement (2) gemäß einem der Ansprüche 1 bis 4, **dadurch gekennzeichnet, dass** das äußere Leitungsteil (4) einen ersten und einen zweiten glattzylindrischen Endabschnitt (11, 12) an seinen jeweiligen Enden aufweist.

6. Flexibles Leitungselement (2) gemäß einem der Ansprüche 1 bis 5, **dadurch gekennzeichnet, dass** der Balgabschnitt (7) des inneren Leitungsteils (3) etwa mittig zwischen dem ersten glattzylindrischen Endabschnitt (9) und dem zweiten glattzylindrischen Endabschnitt (10) des inneren Leitungsteils (3) angeordnet ist.

7. Flexibles Leitungselement (2) gemäß einem der Ansprüche 1 bis 6, **dadurch gekennzeichnet, dass** an der Befestigungseinrichtung (13, 13') insbesondere an der axialen Verlängerung (24, 24') des U-Profils, ein weiteres Leitungselement anbindbar ist.

8. Flexibles Leitungselement (2) gemäß einem der Ansprüche 5 bis 7, **dadurch gekennzeichnet, dass** zwischen dem inneren Leitungsteil (3) und dem äußeren Leitungsteil (4) im Bereich der jeweiligen ersten und/oder zweiten Endabschnitte (9, 10, 11, 12) jeweils ein Dichtelement (16), insbesondere ein Dichtring aus Graphit, angeordnet ist.

9. Flexibles Leitungselement (2) gemäß einem der Ansprüche 5 bis 8, **dadurch gekennzeichnet, dass** das äußere Leitungsteil (4) zumindest an einem der ersten und zweiten Endabschnitte (11, 12) von einer Endhülse (15, 15', 18, 18') umgeben ist, an welche ein weiteres Leitungselement anbindbar ist.

10. Flexibles Leitungselement (2) gemäß einem der Ansprüche 1 bis 9, **dadurch gekennzeichnet, dass** das innere Leitungsteil (3) und das äußere Leitungsteil (4) unterschiedliche Längen aufweisen.

11. Flexibles Leitungselement (2) gemäß einem der Ansprüche 1 bis 10, **dadurch gekennzeichnet, dass** Oberflächen des inneren Leitungsteils (3) und/oder des äußeren Leitungsteils (4) mit einer Beschichtung versehen sind, insbesondere geschwärzt, höchst vorzugsweise zumindest auf der Innenseite des äußeren Leitungsteils (4).

12. Flexibles Leitungselement (2) gemäß einem der Ansprüche 1 bis 11, **dadurch gekennzeichnet, dass** das äußere Leitungsteil (4) zumindest teilweise von einer Außenkomponente, insbesondere von einem Außenliner, einem Gestricke, einem Geflecht oder einem Schrumpfschlauch, umgeben ist.

## Claims

1. Flexible pipe element (2), in particular a decoupling element (1), for an exhaust gas system of a motor vehicle, which has an inner pipe part (3) and an outer pipe part (4), wherein the outer pipe part (4) surrounds the inner pipe part (3) at a predetermined distance (5), with the result that an interspace (6) is present between the inner and the outer pipe part (3, 4), wherein the inner pipe part (3) is designed to be gas-tight and has a bellows portion or annular corrugated portion (7, 8), and wherein the bellows portion (7) of the inner pipe part (3) is arranged between a first smooth cylindrical end portion (9) and a second smooth cylindrical end portion (10) of the inner pipe part (3), which end portions (9, 10) are in each case provided with a fastening device (13, 13') for fastening the inner pipe part (3) to the outer pipe part (4), **characterized in that** the fastening device (13, 13') comprises an axially extended U profile, **in that** the U profile is attached by a first leg (20, 20') to the first smooth cylindrical end portion (9) of the inner pipe part (3) and by a second leg (21) to the smooth cylindrical end portion (11) of the outer pipe part (4), and **in that** the axially extended U profile has an extension (24, 24') which is provided on the first leg (20, 20').

2. Flexible pipe element (2) according to Claim 1, **characterized in that** the inner pipe part (3) is an annular corrugated hose or bellows and the outer pipe part (4) is an annular corrugated hose or bellows, preferably made of metal.

3. Flexible pipe element (2) according to Claim 1, **characterized in that** the inner pipe part (3) is an annular corrugated hose or bellows and the outer pipe part (4) is a wound hose.

4. Flexible pipe element (2) according to one of Claims 1 to 3, **characterized in that** an insulating agent, in particular air or basalt rock wool or glass fibre, is arranged in the interspace (6) between the inner pipe part (3) and the outer pipe part (4).

5. Flexible pipe element (2) according to one of Claims 1 to 4, **characterized in that** the outer pipe part (4) has a first and a second smooth cylindrical end portion (11, 12) at its respective ends.

6. Flexible pipe element (2) according to one of Claims 1 to 5, **characterized in that** the bellows portion (7) of the inner pipe part (3) is arranged approximately centrally between the first smooth cylindrical end portion (9) and the second smooth cylindrical end portion (10) of the inner pipe part (3).

7. Flexible pipe element (2) according to one of Claims 1 to 6, **characterized in that** a further pipe element can be attached to the fastening device (13, 13'), in particular to the axial extension (24, 24') of the U profile.

8. Flexible pipe element (2) according to one of Claims 5 to 7, **characterized in that** a sealing element (16), in particular a sealing ring made of graphite, is arranged in each case between the inner pipe part (3) and the outer pipe part (4) in the region of the respective first and/or second end portions (9, 10, 11, 12).

9. Flexible pipe element (2) according to one of Claims 5 to 8, **characterized in that** the outer pipe part (4) is surrounded, at least at one of the first and second end portions (11, 12), by an end sleeve (15, 15', 18, 18') to which a further pipe element can be attached.

10. Flexible pipe element (2) according to one of Claims 1 to 9, **characterized in that** the inner pipe part (3) and the outer pipe part (4) have different lengths.

11. Flexible pipe element (2) according to one of Claims 1 to 10, **characterized in that** surfaces of the inner pipe part (3) and/or of the outer pipe part (4) are provided with an, in particular blackened, coating, most preferably at least on the inner side of the outer pipe part (4).

12. Flexible pipe element (2) according to one of Claims 1 to 11, **characterized in that** the outer pipe part (4) is at least partially surrounded by an outer component, in particular by an outer liner, a knitted fabric, a braided fabric or a shrink hose.

## Revendications

1. Elément de conduite flexible (2), en particulier élément de découplage (1) destiné à un système d'échappement de véhicule automobile, comprenant une partie de conduite (3) intérieure et une partie de conduite (4) extérieure, ladite partie de conduite (4) extérieure entourant ladite partie de conduite (3) intérieure à une distance prédéterminée (5), de telle sorte qu'un espace interstitiel (6) se trouve entre lesdites parties de conduite intérieure et extérieure (3, 4), la partie de conduite (3) intérieure étant de réalisation étanche aux gaz, et comportant un tronçon de soufflet ou un tronçon (7, 8) à ondulations annulaires, le tronçon de soufflet (7) de la partie de conduite (3) intérieure étant interposé entre une première région extrême (9) cylindrique lisse et une seconde région extrême (10) cylindrique lisse de ladite partie de conduite (3) intérieure, lesquelles régions extrêmes (9, 10) sont munies d'un dispositif de fixation (13, 13') respectif, conçu pour fixer la partie de conduite (3) intérieure à la partie de conduite (4) extérieure, **caractérisé par le fait que** le dispositif de fixation (13, 13') inclut un profil en U prolongé axialement ; **par le fait que** ledit profil en U est rattaché, par une première branche (20, 20'), à la première région extrême (9) cylindrique lisse de la partie de conduite (3) intérieure et, par une seconde branche (21), à la région extrême (11) cylindrique lisse de la partie de conduite (4) extérieure ; et **par le fait que** ledit profil en U, prolongé axialement, offre un prolongement (24, 24') prévu sur ladite première branche (20, 20').

2. Elément de conduite flexible (2) conforme à la revendication 1, **caractérisé par le fait que** la partie de conduite (3) intérieure est un tuyau souple annelé ou un soufflet, et la partie de conduite (4) extérieure est un tuyau souple annelé ou un soufflet, de préférence en métal.

3. Elément de conduite flexible (2) conforme à la revendication 1, **caractérisé par le fait que** la partie de conduite (3) intérieure est un tuyau souple annelé ou un soufflet, et la partie de conduite (4) extérieure est un tuyau souple à ondulations hélicoïdales.

4. Elément de conduite flexible (2) conforme à l'une des revendications 1 à 3, **caractérisé par le fait que** l'espace interstitiel (6) entre la partie de conduite (3) intérieure et la partie de conduite (4) extérieure renferme un moyen d'isolation, en particulier de l'air ou de la laine de basalte, voire une fibre de verre.

5. Elément de conduite flexible (2) conforme à l'une des revendications 1 à 4, **caractérisé par le fait que** la partie de conduite (4) extérieure présente, à ses extrémités respectives, des première et seconde régions extrêmes (11, 12) cylindriques lisses.

6. Elément de conduite flexible (2) conforme à l'une des revendications 1 à 5, **caractérisé par le fait que** le tronçon de soufflet (7) de la partie de conduite (3) intérieure occupe une position sensiblement centrale entre la première région extrême (9) cylindrique lisse et la seconde région extrême (10) cylindrique lisse de ladite partie de conduite (3) intérieure.

7. Elément de conduite flexible (2) conforme à l'une des revendications 1 à 6, **caractérisé par le fait qu'**un élément de conduite supplémentaire peut être rattaché au dispositif de fixation (13, 13'), en particulier au niveau du prolongement axial (24, 24') du profil en U.

8. Elément de conduite flexible (2) conforme à l'une des revendications 5 à 7, **caractérisé par le fait qu'**un élément d'étanchement (16) respectif, en particulier un anneau d'étanchement en graphite, est interposé entre la partie de conduite (3) intérieure et la partie de conduite (4) extérieure, dans la zone des premières et/ou secondes régions extrêmes (9, 10, 11, 12) considérées.

9. Elément de conduite flexible (2) conforme à l'une des revendications 5 à 8, **caractérisé par le fait que** la partie de conduite (4) extérieure est entourée, au moins dans l'une des première et seconde régions extrêmes (11, 12), par une douille d'extrémité (15, 15', 18, 18') à laquelle un élément de conduite supplémentaire peut être rattaché.

10. Elément de conduite flexible (2) conforme à l'une des revendications 1 à 9, **caractérisé par le fait que** la partie de conduite (3) intérieure et la partie de conduite (4) extérieure présentent des longueurs différentes.

11. Elément de conduite flexible (2) conforme à l'une des revendications 1 à 10, **caractérisé par le fait que** des surfaces de la partie de conduite (3) intérieure, et/ou de la partie de conduite (4) extérieure, sont dotées d'un revêtement et sont notamment noircies, au moins sur la face intérieure de ladite partie de conduite (4) extérieure, avec préférence maximale.

12. Elément de conduite flexible (2) conforme à l'une des revendications 1 à 11, **caractérisé par le fait que** la partie de conduite (4) extérieure est entourée, au moins partiellement, par un élément structurel extérieur et notamment par un chemisage extérieur, un tricot, un tressage ou un tuyau souple thermorétractable.
